Europäisches Patentamt

European Patent Office

Office européen des brevets

(11) Numéro de publication: **0 352 162**
A1

## (12) DEMANDE DE BREVET EUROPEEN

(21) Numéro de dépôt: 89401913.2

(22) Date de dépôt: 04.07.89

(51) Int. Cl.5: **B 23 B 31/16**

(30) Priorité: 21.07.88 FR 8809874

(43) Date de publication de la demande:
24.01.90 Bulletin 90/04

(84) Etats contractants désignés:
CH DE ES GB IT LI SE

(71) Demandeur: SANDVIK TOBLER S.A.
4, Avenue de la Vieille France
F-95380 Louvres (FR)

(72) Inventeur: Barbieux, Jacques
20, Avenue Beauséjour
F-95380 Louvres (FR)

(74) Mandataire: Morash, Daniel
17, Avenue La Bruyère
F-78160 Marly-le-Roi (FR)

(54) Système de changement rapide de mors de serrage sur une machine-outil.

(57) Système de changement rapide de inter alia, mors de serrage sur une machine outil qui comporte des moyens de verrouillage autobloquants d'un mors ($M_1$) pour le serrage par l'intérieur d'une pièce ou d'un mors ($M_2$) pour le serrage par l'extérieur d'une pièce. Le porte mors (P) est pourvu d'au moins deux parties d'appui ($1_{21}$, $1_{22}$) pour lesdits mors ($M_1$, $M_2$), les faces d'appui ($1_{211}$) et ($1_{221}$) étant inclinées d'un angle ($\alpha$) et ($\gamma$) respectivement. Ces faces ($1_{211}$) et ($1_{221}$) coopèrent, en position de blocage, avec des faces d'appui ($M_{21}$, $M_{22}$) correspondantes des mors ($M_1$, $M_2$). Une des extrémités ($2_{10}$) d'un ensemble (2) a une face ($2_{100}$) inclinée d'un angle ($\beta$), tandis qu'une autre face ($2_{101}$) est inclinée d'un angle ($\delta$). Ces faces ($2_{100}$) et ($2_{101}$) coopèrent en position de blocage avec la face d'appui correspondante ($M_{23}$) ou ($M_{24}$) respectivement d'un des mors ($M_2$) ou ($M_1$).

FIG.2a

## Description

## SYSTEME DE CHANGEMENT RAPIDE DE MORS DE SERRAGE SUR UNE MACHINE-OUTIL

La présente invention concerne un système de changement rapide de mors de serrage sur une machine-outil, qui peut être utilisé aussi bien pour le serrage par l'intérieur ou par l'extérieur de la pièce à serrer, pour être utilisé pour des usinages répétitifs et successifs par l'extérieur ou par l'intérieur des pièces.

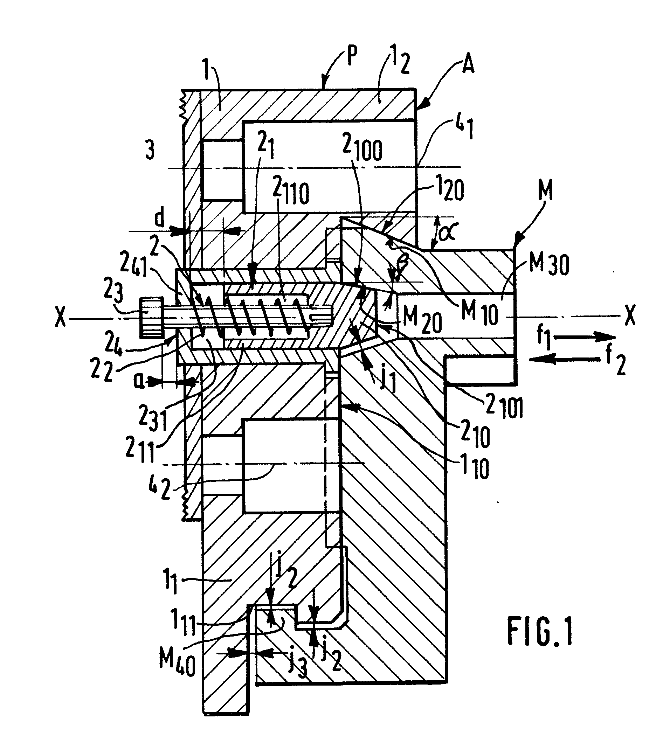

Dans son brevet d'invention N° 85 10958 du 17 Juillet 1985, la demanderesse a décrit un système de changement rapide de mors de serrage sur une machine-outil comportant des moyens de verrouillage auto-bloquants des mors (M) sur le porte-mors (P), lesdits moyens étant essentiellement constitués par un élément bloquant (1) ayant une base ($1_1$) sur une face ($1_{10}$) sur laquelle repose ledit mors (M) en position de blocage, et une partie ($1_2$) d'appui pour le mors (M), la face d'appui ($1_{20}$) de ladite partie d'appui ($1_2$) étant inclinée d'un angle ($\alpha$) avec un plan horizontal perpendiculaire au plan vertical à ladite face ($1_{10}$) de ladite base ($1_1$) pour coopérer en position de blocage, avec une face d'appui ($M_{20}$) correspondante du mors (M) d'une part, et, d'autre part, par au moins un ensemble (2) pour le maintien dudit mors en position de blocage, l'une des extrémités ($2_{10}$) d'un organe mobile ($2_1$) dudit ensemble (2) ayant au moins und face ($2_{100}$) inclinée d'un angle ($\beta$) avec un plan horizontal perpendiculaire au plan vertical à ladite face ($1_{10}$) de ladite base ($1_1$) pour coopérer, en position de blocage, avec une face d'appui ($M_{20}$) correspondante du mors (M), lesdits angles ($\alpha$) et ($\beta$) étant overts dans le même sens, ledit angle ($\alpha$) étant plus grand que ledit angle ($\beta$) ; ledit ensemble (2) comprenant, en outre, des moyens ($2_1$, $2_2$) permettant le déblocage et le déverrouillage dudit mors (M). (Voir Fig. 1).

Ledit angle ($\alpha$) est 1,4 à 2 fois l'angle ($\beta$) et la différence entre les angles ($\alpha$) - ($\beta$) est de l'ordre de 7° à 10°. [$\alpha = 1,4 \div 2\ \beta$; $\alpha$ -$\beta$: 7° $\div$ 10°].

La grandeur de l'angle ($\alpha$) est de préférence de 15° à 30°, et celle de l'angle ($\beta$) est de préférence de 7° et 20°.

Le dispositif décrit dans ce brevet ne permet pas l'utilisation de mors pour le serrage par l'extérieur et/ou par l'intérieur de la pièce à usiner, nécessitant ainsi le changement du porte-mors et/ou des mors pour chaque mode d'usinage. Il en résulte une perte de temps considérable, une complication dûe à la multiplicité du porte-mors et mors nécessaires, et un coût de production relativement élevé.

La présente invention a pour objet de pallier ces inconvénients.

Conformément à la présente invention, le système de changement rapide de, interalia, mors de serrage sur une machine-outil est caractérisé en ce qu'il comporte des moyens de verrouillage autobloquants d'un mors ($M_1$) pour le serrage par l'intérieur d'une pièce ou d'un mors ($M_2$) pour le serrage par l'extérieur d'une pièce sur un porte-mors (P), ces moyens étant essentiellement constitués par un élément bloquant ayant une base sur une face sur laquelle repose ledit mors ($M_1$, $M_2$) en position de blocage, et au moins deux parties d'appui pour lesdits mors ($M_1$, $M_2$), les faces d'appui étant inclinées d'un angle ($\alpha$) et ($\gamma$) respectivement avec des plans horizontaux ($H_1$, $H_2$) perpendiculaires au plan vertical à ladite face de ladite base pour coopérer en position de blocage, avec des faces d'appui correspondantes des mors ($M_1$, $M_2$) d'une part et d'autre part par moins un ensemble pour le maintien d'un desdits mors ($M_1$) ou ($M_2$) en position de blocage, l'une des extrémités ayant une face inclinée d'un angle ($\beta$) avec un plan horizontal ($H_3$) perpendiculaire au plan vertical à ladite face de ladite base tandis qu'une autre face est inclinée d'un angle ($\delta$) avec un plan horizontal ($H_4$), pour coopérer en position de blocage avec la face d'appui correspondante respectivement d'un des mors ($M_2$) ou ($M_1$), lesdits angles ( $\alpha$ , $\beta$ , $\gamma$ , $\delta$ ) étant ouverts dans le même sens, les angles($\alpha$,$\gamma$) étant plus grands que les angles ($\beta$,$\delta$); ledit ensemble comprenant, en outre, des moyens permettant de façon connue en soi le déblocage et le déverrouillage d'un desdits mors ($M_1$, $M_2$).

Lesdits plans ($H_1$) et ($H_2$) se trouvent à une distance ($R_1$) et ($R_2$) respectivement par rapport à un plan horizontal passant par l'axe A - A du mandrin, ($R_1$) étant plus grand que ($R_2$), le plan ($H_1$) étant situé à une distance (a) d'un plan horizontal passant par l'axe x - x de l'ensemble (2) de maintien d'un mors ($M_1$, $M_2$) en position de blocage tandis que le plan ($H_2$) se trouve à une distance ( b ) du plan passant par l'axe x - x.

Ledit plan ($H_3$) est à une distance ($r_1$) du plan horizontal passant par l'axe A - A, et que ledit plan ($H_4$) est à une distance ($r_2$) dudit plan passant par l'axe A - A, ($r_1$) étant plus grand que ($r_2$); lesdits plans ($H_3$) et ($H_4$) étant à une distance (c) et (d) respectivement par rapport audit plan horizontal passant par l'axe x - x.

La distance (a) peut être égale à ( b ).
La distance (c) peut être égale à ( d ).
L'angle ($\alpha$) peut être égal à l'angle ( $\gamma$ ).
L'angle ($\beta$) peut être égal à l'angle ( $\delta$ ).

Enfin, chaque mors ($M_1$, $M_2$) comporte un talan qui, lors du blocage et du verrouillage d'un desdits mors ($M_1$, $M_2$) est logé dans un évidement correspondant dans la partie périphérique de ladite base dudit élé ment du porte-mors.

D'autres avantages et caractéristiques ressortiront du texte suivant et des figures y afférentes, donnés à titre d'exemple uniquement.

Le texte et les figures concernent un mandrin tel qu'utilisé sur les machines-outils où, en général, la pièce à usiner et/ou l'outil sont imprégnés d'un mouvement rotatif. Il est toutefois dans le cadre de l'invention d'utiliser ce système de changement rapide d'un organe amovible sur un organe fixe, tel qu'un mors sur un porte-mors, pour le serrage des pièces les plus diverses, par exemple sur une raboteuse, un shaping, des installations de montage, etc..., après avoir effectué les modifications nécessaires pour adapter le système conforme à l'invention à l'utilisation désirée.

La figure 1 montre, en coupe, un système tel que décrit dans le brevet français N° 85 10958 au nom de la demanderesse.

La figure 2a montre, en coupe, un système conforme à l'invention pour le serrage par l'intérieur d'une pièce.

La figure 2b montre, en coupe, un système conforme à l'invention pour le serrage par l'extérieur d'une pièce.

La figure 2c montre une coupe transversale passant par l'axe x - x de l'ensemble (2) du système conforme à l'invention.

La figure 3 montre, en perspective, un porte-mors du système conforme à l'invention.

Les figures 4a, 4b, 4c montrent, en perspective, des mors pour le serrage des pièces par l'intérieur, par l'extérieur et un mors ébauché.

Le principe de blocage et verrouillage des mors (autobloquants) sur le porte-mors est sensiblement identique à celui décrit dans le brevet français susmentionné N° 85 10 958, permettant une très grande répétitivité de l'opération, avec une grande précision du montage du mors sur le poste-mors et une usure très faible des organes faisant partie du système d'échange rapide.

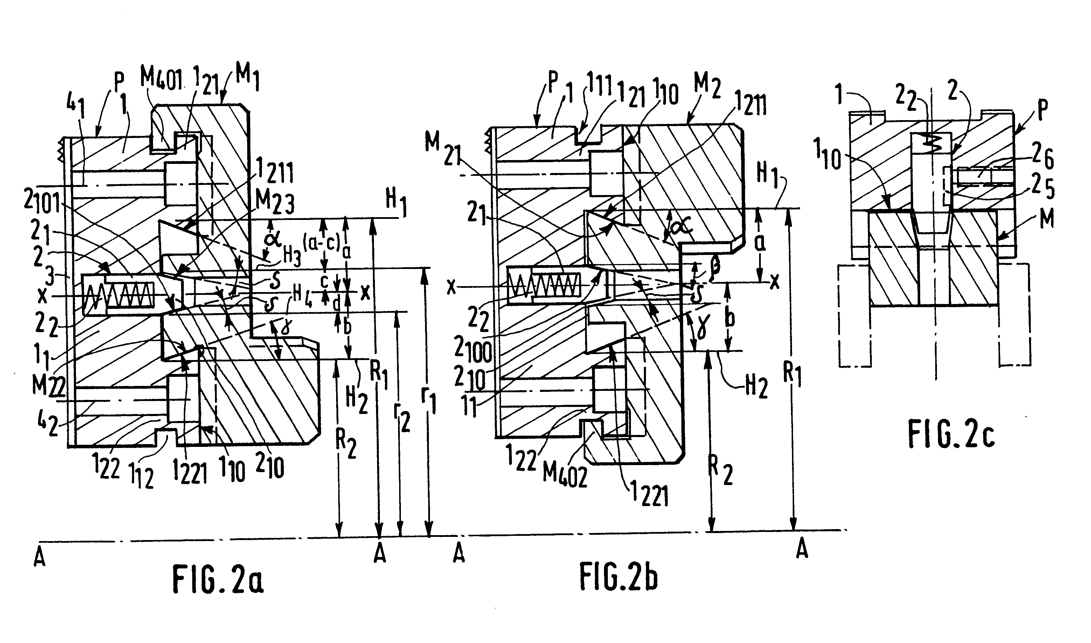

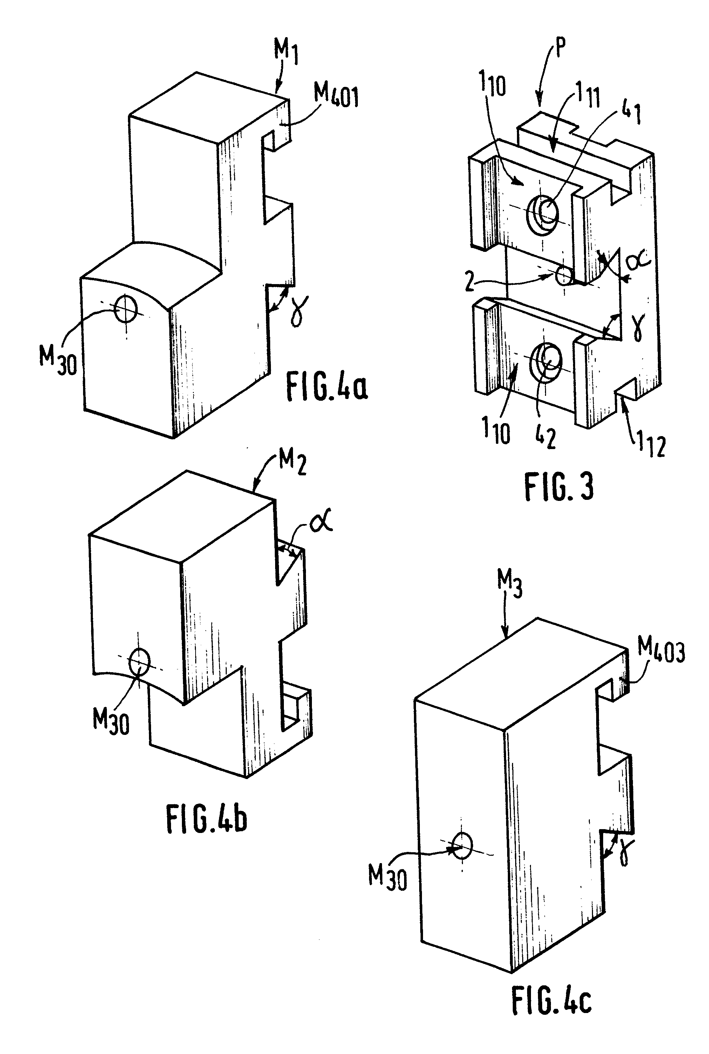

Comme c'est montré dans les figures 2a, 2b, 2c et 3, le porte mors (P) est réalisé de façon à pouvoir être utilisé pour des mors $(M_1)$ pour le serrage par l'intérieur d'une pièce (non montrée sur les dessins) ou pour des mors $(M_2)$ pour le serrage par l'extérieur d'une pièce.

En effet, le porte-mors (P) comporte un élément bloquant (1), un ensemble (2) pour le maintien des mors $(M_1$ ou $M_2)$ en position de blocage et de verrouillage, une zone (3) dentée, par exemple sur la face inférieure de l'élément (1) pour le maintien en position du porte-mors (P) sur le mandrin (non montré sur les dessins) dont l'axe principal est A - A. Le porte-mors (P) est fixé sur le mandrin par des vis $(4_1, 4_2)$ ou analogue.

L'élément (1) comporte une base $(1_1)$ et des parties d'appui $(1_{21})$ et $(1_{22})$ pour le mors $(M_1)$ et le mors $(M_2)$ respectivement. Ces parties d'appui sont délimitées du côté du mors $(M_1)$ par une face d'appui $(1_{221})$ inclinée d'un angle ( $\gamma$ ) avec un plan horizontal perpendiculaire $(H_2)$ au plan vertical à la face $(1_{10})$ de ladite base $(1_1)$; et du côté du mors $(M_2)$ par une face d'appui $(1_{211})$ inclinée d'un angle ( $\alpha$ ) avec un plan horizontal $(H_1)$ audit plan vertical $(1_{10})$.

L'ensemble (2) comprend essentiellement une chemise cylindrique dans laquelle peut se déplacer sous l'action d'un ressort $(2_2)$, selon l'axe x - x, un poussoir $(2_1)$ ayant une extrémité avant $(2_{10})$ sensiblement conique ou ayant deux plans inclinés d'un angle ( $\beta$ ) et ( $\delta$ ) respectivement. Une rainure $(2_5)$ peut être prévue dans le poussoir $(2_1)$ pour pouvoir le maintenir en position de blocage et de verrouillage ou en position de déblocage et de déverrouillage au moyen d'un doigt $(2_6)$ vissé dans l'élément fixe (1). Comme c'est déjà mentionné plus haut, une partie (supérieure) de ladite tête $(2_{10})$ a une face inclinée $(2_{100})$ d'un angle ( $\beta$ ) avec un plan horizontal $(H_3)$ perpendiculaire au plan vertical à ladite face $(1_{10})$, et une partie (inférieure) de ladite tête $(2_{10})$ a une face inclinée $(2_{101})$ d'un angle ( $\delta$ ) avec un plan horizontal $(H_4)$.

Chaque mors $(M_1)$ et $(M_2)$ comporte à l'une de ses extrémités une face inclinée $(M_{21})$ et $(M_{22})$ respectivement; l'angle d'inclinaison de la face $(M_{22})$ est égal à l'angle d'inclinaison ( $\gamma$ ) de la face $(1_{221})$ de l'élément (1), et l'angle d'inclinaison de la face $(M_{21})$ est égal à l'angle ( $\alpha$ ) de la face $(1_{211})$ de l'élément (1). En position de blocage du mors $(M_1)$ sur le porte-mors (P), la face $(M_{22})$ inclinée du mors $(M_1)$ coopère avec la face inclinée $(1_{221})$ du porte-mors (P); de façon similaire, en position de blocage du mors $(M_2)$ sur le porte-mors (P), la face inclinée $(M_{21})$ du mors $(M_2)$ coopère avec la face inclinée $(1_{211})$ du porte-mors (P). L'autre extrémité de chaque mors $(M_1)$ et $(M_2)$ comporte un talon $(M_{401})$ et $(M_{402})$ respectivement qui est logé, en position de blocage, dans l'un des évidements $(1_{11})$ et $(1_{12})$ respectivement; ces évidements sont pratiqués de façon diamétralement opposés dans la périphérie de la base $(1_1)$ de l'élément (1). Il est ainsi possible de monter sur le porte-mors (P) soit au moins un mors $(M_1)$ pour le serrage par l'intérieur, soit au moins un mors $(M_2)$ pour le serrage par l'extérieur d'une pièce à usiner, par exemple. Pour assurer le blocage et le verrouillage de mors $(M_1)$, en position de verrouillage, une face inclinée $(M_{22})$ du mors $(M_1)$ coopère avec la face inclinée $(1_{221})$ du porte-mors (P), l'angle d'inclinaison ( $\gamma$ ) des faces $(M_{22})$ et $(1_{221})$ étant identique. De façon similaire, en position de verrouillage du mors $(M_2)$, sa face inclinée $(M_{21})$ coopère avec la face inclinée $(1_{211})$ du porte-mors (P),l'angle d'inclinaison ( $\alpha$ ) des faces $(M_{22})$ et $(1_{211})$ étant identique.

Les plans horizontaux $(H_1, H_2, H_3, H_4)$ se trouvent à des distances $(R_1, R_2, r_1$ et $r_2)$ d'un plan horizontal passant par l'axe longitudinal A - A du mandrin : $R_1 > r_1 > r_2 > R_2$. Les plans $(H_1$ et $H_2)$ se trouvent à des distances (a) et (b) respectivement d'un plan horizontal passant par l'axe x - x, et les plans $(H_3$ et $H_4)$ à des distances (c) et (d) respectivement de ce même plan horizontal passant par l'axe x - x. La distance (a - c) est donc égale à $(R_1 - r_1)$. L'angle ( $\alpha$ ) est toujours plus grand que l'angle ( $\beta$ ), et l'angle ( $\gamma$ ) est toujours plus grand que l'angle ( $\delta$ ).

Il est donc possible, qu'en modifiant , selon les besoins, au moins l'une des distances $(R_1, r_1, r_2$ et $R_2)$ de constituer une gamme de mors pour le serrage d'une pièce par l'intérieur ou par l'extérieur. Notamment, pour (a = b) et (c = d), l'angle $(\alpha)$ est égal à l'angle $(\gamma)$ et l'angle ( $\beta$ ) est égal à l'angle $(\delta)$; ceci permet l'utilisation d'un même mors pour le serrage par l'intérieur et/ou par l'extérieur d'une pièce.

De nombreuses modifications et/ou améliorations peuvent être faites aux systèmes décrits ci-dessus sans pour autant sortir du cadre de l'invention.

## Revendications

1.) - Système de changement rapide de, interalia, mors de serrage sur une machine-outil, caractérisé en ce qu'il comporte des moyens de verrouillage autobloquants d'un mors ($M_1$) pour le serrage par l'intérieur d'une pièce ou d'un mors ($M_2$) pour le serrage par l'extérieur d'une pièce sur un porte-mors (P), ces moyens étant essentiellement constitués par un élément bloquant (1) ayant une base ($1_1$) sur une face ($1_{10}$) sur laquelle repose ledit mors ($M_1, M_2$) en position de blocage, et au moins deux parties d'appui ($1_{21}, 1_{22}$) pour lesdits mors ($M_1, M_2$), les faces d'appui ($1_{211}$) et ($1_{221}$) étant inclinées d'un angle ($\alpha$) et ($\gamma$) respectivement avec des plans horizontaux ($H_1, H_2$) perpendiculaires au plan vertical à ladite face ($1_{10}$) de ladite base ($1_1$) pour coopérer en position de blocage, avec des faces d'appui ($M_{21}, M_{22}$) correspondantes des mors ($M_1, M_2$) d'une part et d'autre part par au moins un ensemble (2) pour le maintien d'un desdits mors ($M_1$) ou ($M_2$) en position de blocage, l'une des extrémités ($2_{10}$) ayant une face ($2_{100}$) inclinée d'un angle ($\beta$) avec un plan horizontal ($H_3$) perpendiculaire au plan vertical à ladite face ($1_{10}$) de ladite base ($1_1$) tandis qu'une autre face ($2_{101}$) est inclinée d'un angle ($\delta$) avec un plan horizontal ($H_4$), pour coopérer en position de blocage avec la face d'appui correspondante ($M_{23}$) ou ($M_{24}$) respectivement d'un des mors ($M_1$) ou ($M_2$), lesdits angles ($\alpha, \beta, \gamma, \delta$) étant ouverts dans le même sens, les angles ($\alpha, \gamma$) étant plus grands que les angles ($\beta, \delta$); ledit ensemble (2) comprenant, en outre, des moyens ($2_1, 2_2$) permettant de façon connue en soi le déblocage et le déverrouillage d'un desdits mors ($M_1, M_2$).

2.) - Système selon la revendication 1, caractérisé en ce que lesdits plans ($H_1$) et ($H_2$) se trouvent à une distance ($R_1$) et $R_2$) respectivement par rapport à un plan horizontal passant par l'axe A - A du mandrin, ($R_1$) étant plus grand que ($R_2$), le plan ($H_1$) étant situé à une distance (a) d'un plan horizontal passant par l'axe x - x de l'ensemble (2) de maintien d'un mors ($M_1, M_2$) en position de blocage tandis que le plan ($H_2$) se trouve à une distance (b) du plan passant par l'axe x - x.

3.) - Système selon la revendication 1 ou la revendication 2, caractérisé en ce que ledit plan ($H_3$) est à une distance ($r_1$) du plan horizontal passant par l'axe A - A, et que ledit plan ($H_4$) est à une distance ($r_2$) dudit plan passant par l'axe A - A, ($r_1$) étant plus grand que ($r_2$); lesdits plans ($H_3$) et ($H_4$) étant à une distance (c) et (d) respectivement par rapport audit plan horizontal passant par l'axe x - x.

4.) - Système selon l'une des revendications précédentes, caractérisé en ce que (a) est égal à (b).

5.) - Système selon la revendication 3 ou la revendication 4, caractérisé en ce que (c) est égal à (d).

6.) - Système selon l'une des revendications précédentes, caractérisé en ce que l'angle ($\alpha$) est égal à l'angle ($\gamma$).

7.) - Système selon l'une des revendications précédentes, caractérisé en ce que l'angle ($\beta$) est égal à l'angle ($\delta$).

8.) - Système selon l'une des revendications précédentes, caractérisé en ce que chaque mors ($M_1, M_2$) comporte un talon ($M_{401}, M_{402}$) qui, lors du blocage et du verrouillage d'un desdits mors ($M_1, M_2$) est logé dans un évidement ($1_{11}, 1_{12}$) correspondant dans la partie périphérique de ladite base ($1_1$) dudit élément (1) du porte-mors.

FIG.1

FIG.2c

FIG.2b

FIG.2a

FIG.4a

FIG. 3

FIG.4b

FIG.4c

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A- 515 283 (FRIEDMANN)<br>--- | 1 | B 23 B  31/16 |
| A | DE-A-3 603 459 (SMW)<br>--- | | |
| A | DE-A-2 813 832 (BERG)<br>--- | | |
| A | DE-A-2 218 637 (FORKARDT)<br>----- | | |

| | DOMAINES TECHNIQUES RECHERCHES (Int. Cl.5) |
|---|---|
| | B 23 B  31/00 |

Le présent rapport a été établi pour toutes les revendications

| Lieu de la recherche | Date d'achèvement de la recherche | Examinateur |
|---|---|---|
| LA HAYE | 19-10-1989 | BOGAERT F.L. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant

EPO FORM 1503 03.82 (P0402)